# EUROPEAN PATENT SPECIFICATION

(11) **EP 1 136 401 B1**
(45) Date of publication and mention of the grant of the patent: **18.08.2004**
(21) Application number: 01100877.8
(22) Date of filing: 16.01.2001
(51) Int. Cl.: B65G 47/14

(54) **Unscrambling machine with bowls for accommodating containers whose necks are offset relative to a longitudinal axis**
Vereinzelungsvorrichtung mit Schüsseln für Behälter mit bezüglich der Längsachse versetzten Hälsen
Dispositif de séparation avec des bol pour des conteneurs avec cols décalés par rapport à l'axe longitudinal

(30) Priority: 15.03.2000 IT PR200016
(43) Date of publication of application: 26.09.2001
(73) Proprietor: Lanfranchi, Lino, 43044 Collecchio (Parma) (IT)
(72) Inventor: Lanfranchi, Lino, 43044 Collecchio (Parma) (IT)
(74) Representative: Guareschi, Antonella

(56) References cited:
- EP-A- 0 856 482
- EP-A- 1 016 601
- WO-A-99/59904
- US-A- 4 681 209

## Description

The present invention relates to a container unscrambling machine with bowls for accommodating containers whose necks are offset relative to a longitudinal axis.

As is known, unscrambling machines are designed to accept a bulk supply of randomly oriented containers and to place them neck up in the upright position.

These machines come in a variety of types, as described, for example, in patent publications EP 0347107, EP 0540477 and DE 3413234.

In these machines, the containers are placed in a recumbent position inside rotary bowls whose bottoms consist of a fixed ring.

The fixed ring has at least one break in it, through which the containers drop into a chute located under the bowl itself.

As is known, the bowl is shaped in such a way that the container always falls neck up. In particular, there is a support that acts as a pivot for the neck about which the container rotates.

In some cases, the neck of the container is offset relative to the longitudinal axis of the container. This is typically the case of large plastic bottles for oils and detergents.

Patent EP 0856482 describes a solution where a camera/visualisation device 17 is connected to cam means which cause a horizontal surface to rotate. This significantly increases the cost of the machine.

Moreover, a technical disadvantage of this type of solution is that the camera may "see" containers that are above those in the discharge bowls and cause the cam means to operate at the wrong time.

A machine in accordance with the preamble of claim 1 is disclosed in WO99/59904.

The Applicant has found that containers with offset neck may jam as they are being tipped from the bowl into the corresponding chute. This jamming usually occurs when the container is lying with its neck on the bottom side.

When this is the case, the top edge of the container bottom is the point that is furthest away from the centre of rotation of the container and may jam against the walls of the bowl.

The aim of the present invention is to overcome the above mentioned disadvantages by providing a container bowl that allows containers whose necks are offset relative to a longitudinal axis to be tipped into the upright position without jamming.

This aim is fully achieved by the containers unscrambling machine according to claim 1.

These and other characteristics are described in more detail below with reference to the accompanying drawings which illustrate two preferred embodiments of the invention and in which:

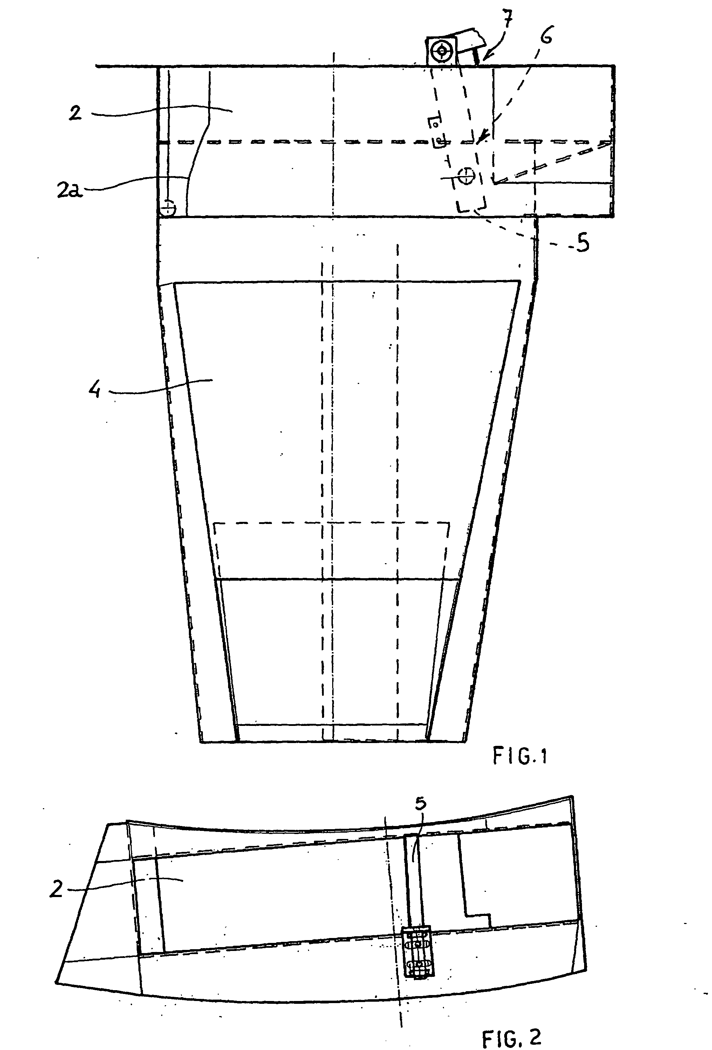

- Figure 1 is a front view of a detail of a bowl according to the present invention in a container unscrambling machine;
- Figure 2 is a top view of the detail shown in Figure 1;

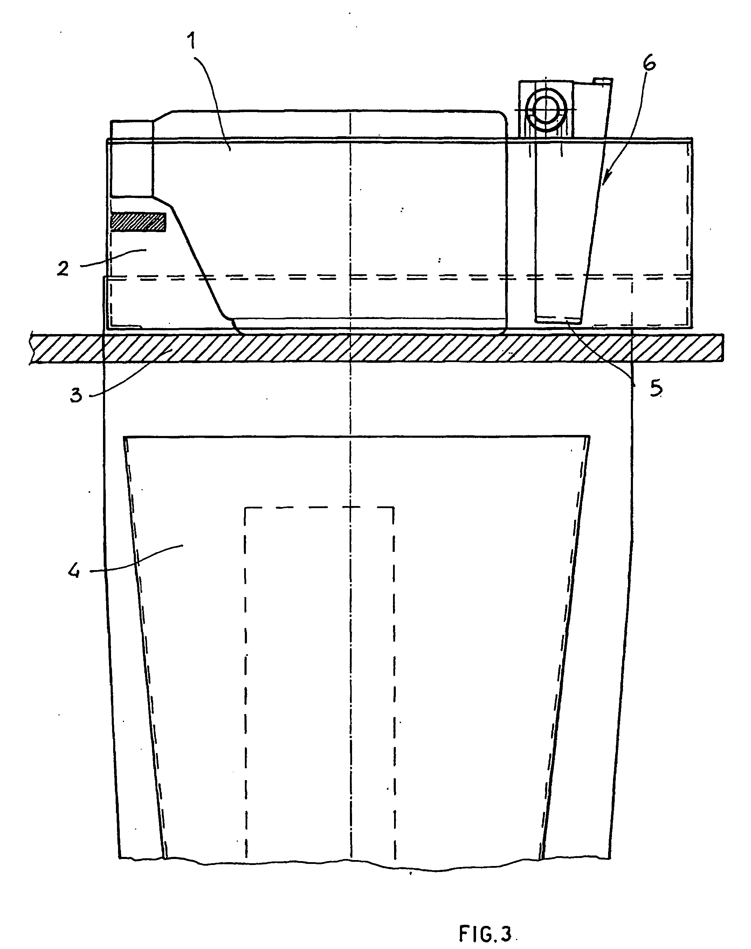

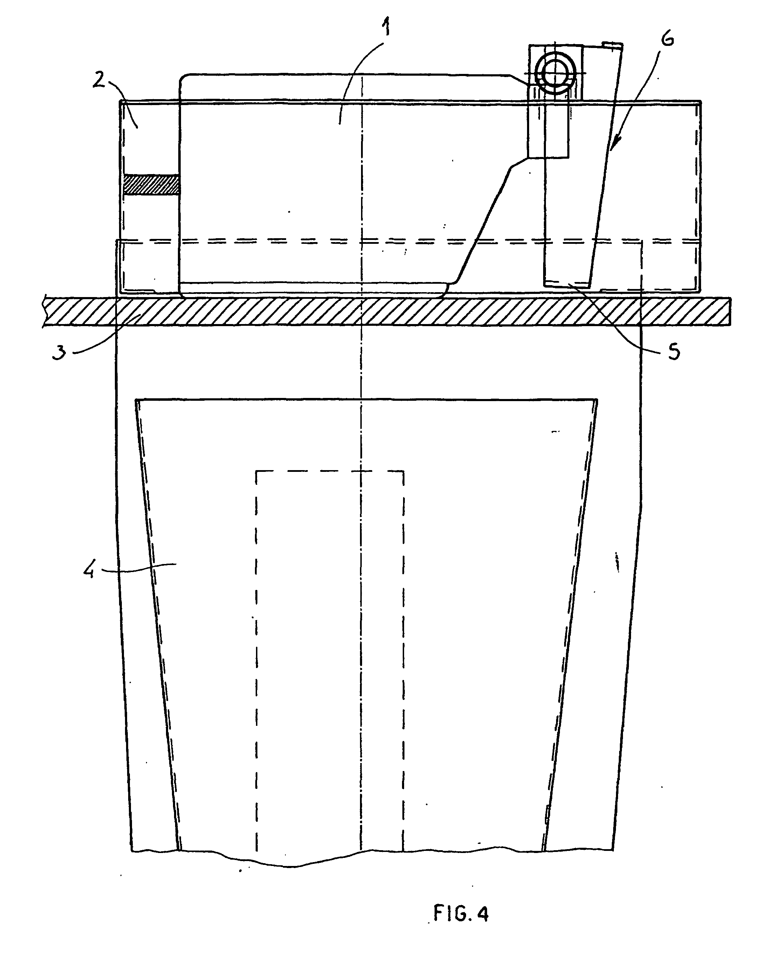

- Figures 3 to 6 illustrate the detail shown in Figure 1, in which there is a container lying in different positions;

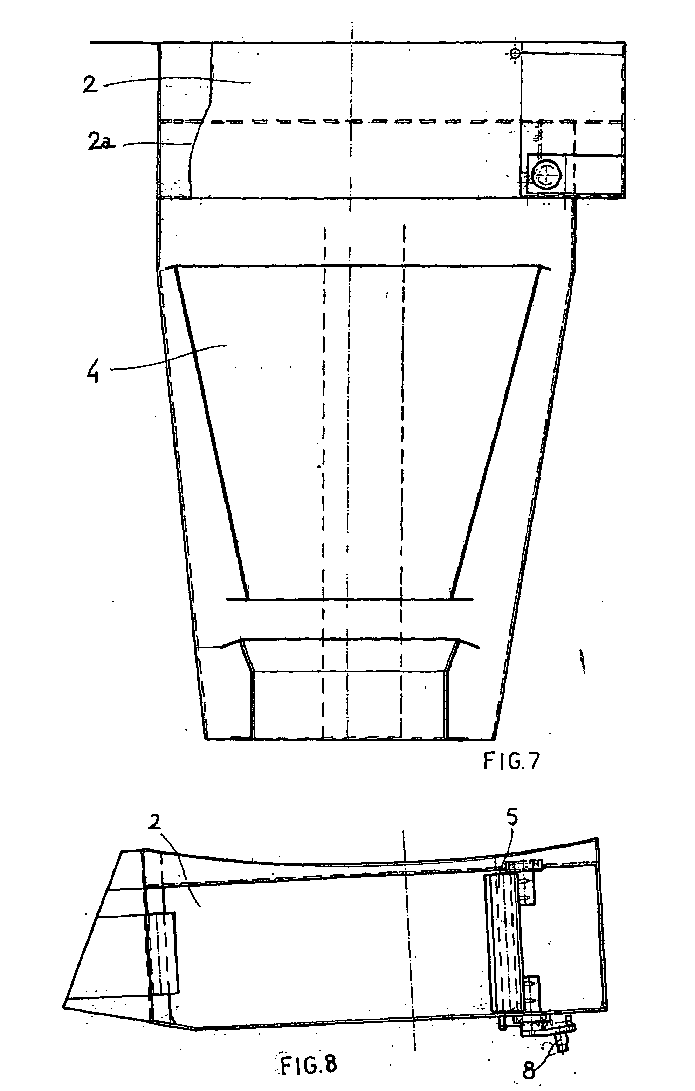

- Figures 7 and 8 are a front view and a top view, respectively, showing another embodiment of the detail shown in Figure 1.

With reference to the accompanying drawings, the numeral 1 indicates a container whose neck is offset relative to a longitudinal axis 1a. This typically is the shape of large plastic bottles used for oils or detergents.

In order to be filled, the containers must be presented in the upright position with neck up.

For this purpose, the randomly oriented containers are fed into an unscrambling machine of substantially known type and therefore not illustrated. A container unscrambling machine normally comprises a base structure consisting, for example, of a fixed cylindrical structure positioned with its longitudinal axis vertical or inclined, depending on machine design.

The base structure acts as container feed hopper and, depending on design, may have inside it a cylinder or a disc that rotates about the fixed cylindrical structure.

In the case of the rotating cylinder, there is a fixed cone inside and concentric with the fixed cylindrical structure and with the rotating cylinder. The cone is designed to receive the containers and to direct them towards the walls of the rotating cylinder where there are means for transferring the containers from a lower level to an upper level.

At its upper level, the rotating cylinder has mounted around its circumference a plurality of bowls 2 within which the container is positioned lying in a recumbent position.

In the case of a fixed inclined cylindrical structure with rotating internal disc concentric with the cylindrical structure, the containers are placed in bulk directly on the rotating disc. The bowls 2 designed to receive the containers lying in a recumbent, substantially horizontal, position are mounted around the circumference of the rotating disc. In this case too, as the disc rotates, the containers are transferred from a lower level to an upper level.

Inside the bowls 2, the containers 1 rest on a bottom 3 usually consisting of a ring attached to the fixed base structure of the unscrambling machine. The bottom has at least one gap in it, which is not illustrated in the drawings.

Below each bowl 2 there is a chute 4 mounted on the outside surface of the rotating cylinder or outside the rotating disc, depending on whether the unscrambling machine is of the type with vertical or inclined axis, respectively.

The chutes 4 rotate with the corresponding bowls 2 above them and are designed to receive the containers in an upright position.

As they rotate, the bowls 2 move the containers 1, which are recumbent, to at least one tipping position, corresponding to the point where the bottom 3 has a gap in it. At that point, the chutes 4 communicate with the bowls 2 so that the containers 1 are tipped neck up from the bowls 2 into the chutes 4.

This is because the bowls 2 comprise at least one support over which the neck of the container is positioned in such a way that when the gap in the bottom 3 is reached, the container 1 rotates about its neck in such a way as to fall neck up into the chute 4.

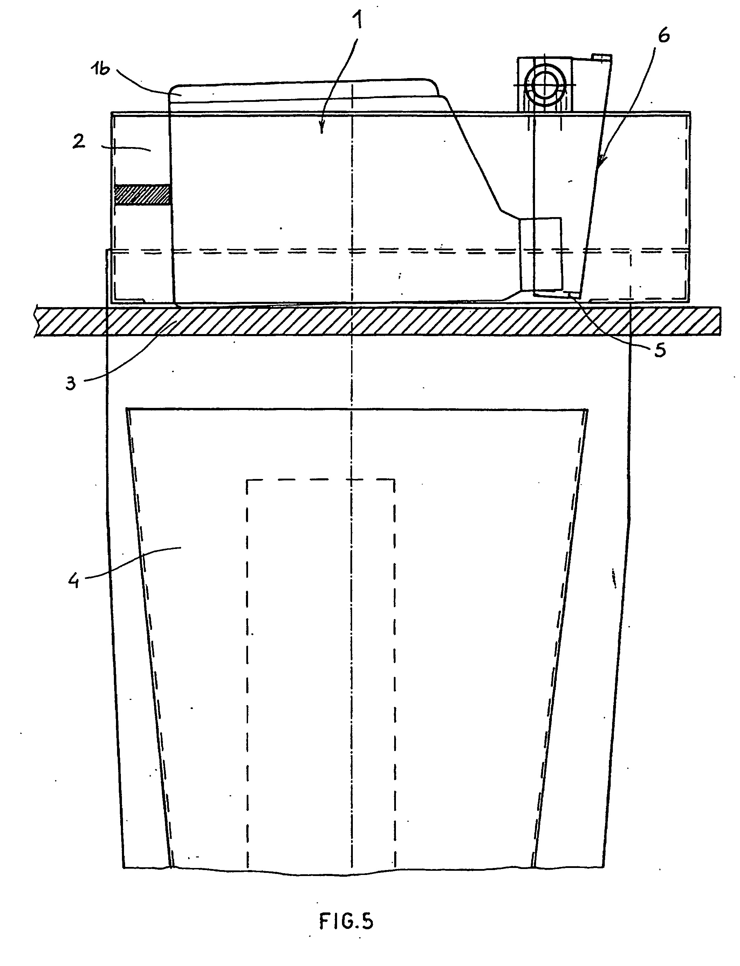

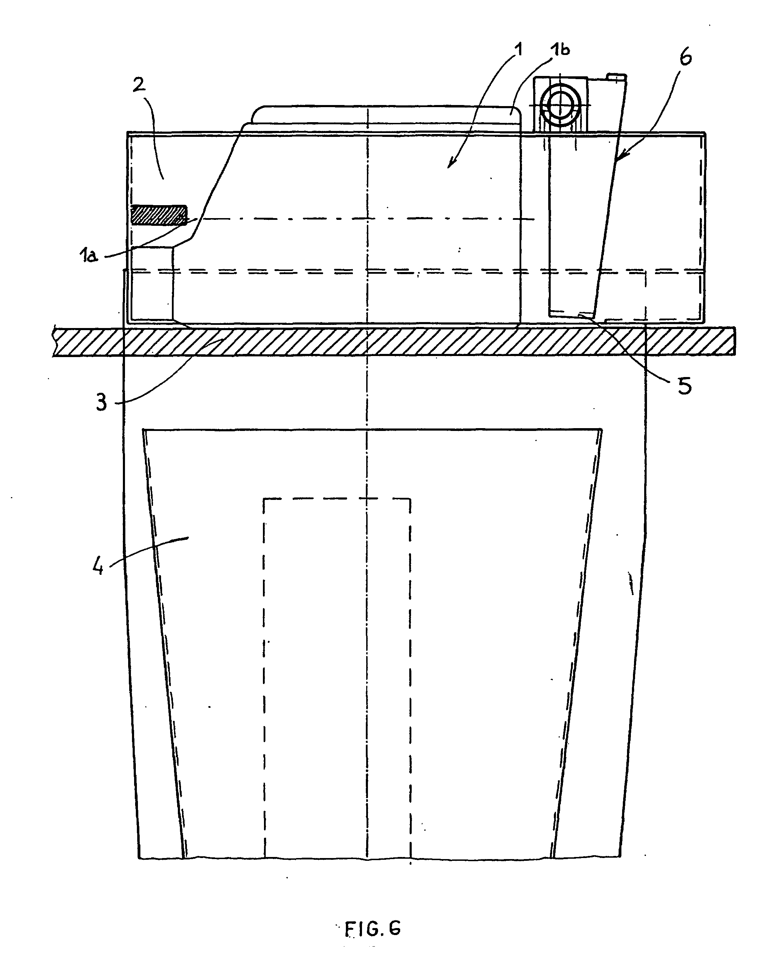

In the case of containers with necks that are offset relative to the longitudinal axis 1a of the containers themselves, rotation may be slowed down or even prevented, especially when the container assumes an attitude where the neck is on the bottom side, as illustrated in Figures 5 and 6.

In fact, when this happens, the end of the container bottom located opposite the neck on the other side of the longitudinal axis 1a may interfere with the wall of the bowl. In Figures 5 and 6, the portion of the container that might interfere with the walls of the bowl is labelled 1b.

To avoid this problem in a new and original manner, the bowl 2 comprises a support 5 that moves between a first position where the container lies horizontal on the bottom of the bowl and a second position where the container is tipped and drops into the chute 4.

The support 5 thus constitutes a mobile end for the section that connects the bowls to the corresponding chutes. Looking in more detail, when the support 5 is in the first position, it forms the end of a connecting section between the bowls and the chutes that is smaller than the section formed when the support is in the second position.

If the container is positioned with the neck on the bottom side, as illustrated in Figures 5 and 6, when it comes close to the tipping position, the support 5 moves from the first to the second position, thus enlarging the connecting section and preventing the bottom portion 1b from jamming.

In particular, the bowl comprises a rocker arm 6 having a first end mounted on the bowl itself and a second end attached to the support 5, allowing the support 5 to rotate about the first end of the rocker arm.

The support rotates under the weight of the container when the latter reaches the gap in the bottom 3, that is to say, when the container is close to the tipping position.

Moreover, the rocker arm may advantageously comprise means 7 for adjusting the stroke of the support according to the weight of the container. In the first embodiment illustrated in the drawings, the adjustment means 7 comprise a threaded element mounted on the rocker arm and having one end that interferes with the bowl.

In another embodiment, the bowl 2 may advantageously comprise a stop element 8 that is connected to, and acts in conjunction with, the support. The stop element extends from the bowl and, as the containers move, interacts with a fixed control, which is not illustrated, located close to the tipping position.

The fixed control may consist, for example, of a cam attached to the inside walls of the fixed cylindrical structure which by interacting with the stop element 8, causes the container support 5 to rotate.

The bowl 2 further comprises an indentation 2a made in a wall of the bowl itself and shaped in such a way as to enable the container 1 to be tipped and in particular in such a way as not to interfere with the end 1b of the container.

The container unscrambling machine comprising the bowl 2 according to the present invention has important advantages.

The tipping of the containers from the recumbent to the upright position is facilitated, avoiding jamming of the containers themselves.

The changes made do not involve structural complications and are reliable not only in the embodiment where the rocker arm is actuated by the weight of the container but also in the embodiment with the external control acting at the container tipping position.

## Claims

1. A containers unscrambling machine with bowls (2) for accommodating containers whose necks are offset relative to a longitudinal axis (1a), of the type comprising:
a base structure;
a bottom (3) attached to the base structure and forming the bottom of the bowls on which the containers lie in a recumbent position and are moved into at least one tipping position at a gap in the bottom (3);
a plurality of substantially vertical chutes (4) located under the bowls (2) and designed to receive the containers (1), said chutes (4) communicating with the bowls (2) close to the tipping position;
at least one support (5) provided in each bowl (2) for a container neck;
**characterised in that** the support (5) is attached to a rocker arm (6) having one end mounted on the bowl itself to allow the support (5) to rotate under the weight of the container (1) when the latter is close to the tipping position and **in that** the support is movable between a first position where the container lies on the bottom (3) and a second position where the container is tipped and drops into a chute (4),and vice versa, the support (5) in said first position forming a connecting section between the bowl and the chute that is smaller than the connecting section formed at the second position.

2. The containers unscrambling machine according to claim 1, wherein at least one wall of it has a shaped indentation (2a) designed to enable the container to be tipped into the chute.

3. The containers unscramblig machine according to claim 1, wherein the rocker arm (6) comprises means (7) for adjusting the stroke of the support (5) according to the weight and length of the container (1)

4. The containers unscrambling machine according to any of the foregoing claims, wherein the support (5) is connected to, and acts in conjunction with, a stop element (8) which extends from the bowl itself in such a way that, during the motion of the containers, it interacts with a fixed control located close to the tipping position.

## Patentansprüche

1. Vereinzelungsmaschine für Behälter mit Schüsseln (2) zur Aufnahme der Behälter, deren Hälse in bezug auf eine Längsachse (1a) versetzt sind, eines Typs, welcher aufweist:
einen Grundaufbau,
einen Boden (3), der an dem Grundaufbau angebracht ist und den Boden der Schüsseln bildet, auf denen die Behälter in einer liegenden Position angeordnet sind und in zumindest eine Stoßposition an einer Öffnung im Boden (3) bewegt werden,
mehrere im wesentlichen senkrechte Schächte (4), welche unter den Schüsseln (2) angeordnet sind und so ausgestaltet sind, dass sie die Behälter (1) aufnehmen, wobei die Schächte (4) mit den Schüsseln (2) in der Nähe der Stoßposition in Wechselwirkung stehen,
zumindest eine Unterstützungseinrichtung (5), die in jeder Schüssel (2) für einen Behälterhals vorgesehen ist,
**dadurch gekennzeichenet,**
dass die Unterstützungseinrichtung (5) an einem Schwinghebel (6) befestigt ist, dessen eines Ende an die Schüssel montiert ist, um zu ermöglichen, dass sich die Unterstützungseinrichtung (5) unter dem Gewicht des Behälters (1) dreht, wenn sich letzerer sich in der Nähe der Stoßposition befindet, und
dass die Unterstützungseinrichtung (5) zwischen einer ersten Position, in der der Behälter auf dem Boden (3) liegt und einer zweiten Position, in der der Behälter angestoßen wird und in den Schacht (4) fällt, und umgekehrt bewegbar ist, wobei die Unterstützungseinrichtung (5) in der ersten Position einen Verbindungsbereich zwischen der Schüssel und dem Schacht bildet, der kleiner als der Verbindungsbereich, der in der zweiten Position ausgebildet wird, ist.

2. Vereinzelungsmaschine für Behälter nach Anspruch 1, wobei zumindest eine Wand eine ausgeformte Vertiefung (2a) aufweist, die so ausgestaltet ist, dass sie es ermöglicht, dass der Behälter in den Schacht gestoßen wird.

3. Vereinzelungsmaschine für Behälter nach Anspruch 1, wobei der Schwinghebel (6) Einrichtungen (7) enthält, um den Stoß durch die Unterstützungseinrichtung 5) in Abhängigkeit von Gewicht und Länge des Behälters (1) einzustellen.

4. Vereinzelungsmaschine für Behälter nach einem der vorhergehenden Ansprüche, wobei die Unterstützungseinrichtung (5) mit einem Anschlagelement (8) verbunden ist und in Verbindung mit diesem agiert, welches sich von der Schüssel selbst aus derart nach außen erstreckt, dass es, während sich der Behälter bewegt, mit einer festen Steuereinrichtung in Wechselwirkung tritt, die in der Nähe der Stoßposition angeordnet ist.

## Revendications

1. Machine d'orientation de conteneurs comprenant des bacs (2) de réception de conteneurs dont les cols sont décalés par rapport à un axe longitudinal (1a), du type comprenant:
- une structure de base;
- un fond (3) fixé à la structure de base et formant le fond des bacs sur lequel les conteneurs reposent dans une position couchée et sont mis en mouvement dans au moins une position de basculement dans une ouverture formée dans le fond (3);
- une pluralité de glissières verticales (4) disposées au-dessous des bacs (2) et conçues pour recevoir les conteneurs (1), lesdites glissières communiquant avec les bacs (2) à proximité de la position de basculement;
- au moins un support (5) prévu dans chaque bac (2) pour le col d'un conteneur;
**caractérisée en ce que** le support (5) est fixé à un culbuteur (6) ayant une extrémité montée sur le bac lui-même pour permettre au support (5) de pivoter sous le poids du conteneur (1) lorsque celui-ci est proche de la position de basculement, et **en ce que** le support est mobile d'une première position, dans laquelle le conteneur repose sur le fond (3), et une seconde position, dans laquelle le conteneur est basculé et chute dans une glissière (4), et vice versa, ladite première position du support (5) formant une surface de connexion entre le bac et la glissière inférieure à la surface de connexion formée dans la seconde position.

2. Machine d'orientation de conteneurs selon la revendication 1, dans laquelle au moins une des parois présente un renfoncement (2a) conçu pour permettre au conteneur de basculer dans la glissière.

3. Machine d'orientation de conteneurs selon la revendication 1, dans laquelle le culbuteur (6) comprend des moyens (7) pour régler la course du support (5) selon le poids et la longueur du conteneur (1).

4. Machine d'orientation de conteneurs selon n'importe laquelle des revendications précédentes, dans laquelle le support (5) est connecté et agit conjointement à un élément d'arrêt (8) qui s'étend du bac de manière à ce que, pendant le mouvement des conteneurs, il interagisse avec un contrôle fixe disposé à proximité de la position de basculement.
